**Europäisches Patentamt**

(19) **European Patent Office**

**Office européen des brevets**

(11) Publication number : **0 330 252 B1**

(12) **EUROPEAN PATENT SPECIFICATION**

(45) Date of publication of patent specification :
10.06.92 Bulletin 92/24

(51) Int. Cl.⁵ : **A23G 9/28**

(21) Application number : **89200286.6**

(22) Date of filing : **08.02.89**

(54) **Machine for express-type ice-cream production with an automatic cycle of ice-cream dispensing on cone.**

(30) Priority : **26.02.88 IT 1956688**

(43) Date of publication of application :
**30.08.89 Bulletin 89/35**

(45) Publication of the grant of the patent :
**10.06.92 Bulletin 92/24**

(84) Designated Contracting States :
**BE CH DE ES FR GB LI NL SE**

(56) References cited :
**EP-A- 0 078 342**
**GB-A- 1 295 945**
**US-A- 2 925 347**
**US-A- 4 502 377**

(73) Proprietor : **Carnisio, Umberto**
**Via XXV Aprile, 71**
**I-28066 Galliate Novara (IT)**

(72) Inventor : **Carnisio, Umberto**
**Via XXV Aprile, 71**
**I-28066 Galliate Novara (IT)**

(74) Representative : **Henke, Erwin et al**
**Ing.Barzanò & Zanardo Milano S.p.A. Via**
**Borgonuovo, 10**
**I-20121 Milano (IT)**

**EP 0 330 252 B1**

## Description

Machines for the automatic dispensing of ice-cream on cone are known, in which also the unit of production of the same ice-cream is contained. In such machines, coupled with a normal ice-cream producing unit, said "of express-", or "soft-type", there are usually contained a control system and a number of accessory components for said control system, in order to accomplish the automatic drawing of a dose of ice-cream and the dispensing thereof directly on a cone.

In such machines, the logics of operation of the control system is of primary importance, so to secure a perfect function thereof, and prevent any possibilities that undesired situations may occur, such as due, e.g., (inasmuch as the machine is of self-service type, and, therefore, is designed for use also by a not expert customer), to operating errors by the customer. For example, the machine, once started up, dispenses immediately the ice-cream, and, consequently, the customer must take care to place a cone under the ice-cream dispensing mouth before he starts up the dispensing of said ice-cream on said cone, and furthermore he should hold the cone in such a way as to facilitate the uniform dispensing of ice-cream on it. Not always is the customer endowed with the necessary skill or experience in order to correctly carry out the dispensing operations, and this fact can lead to unpleasant consequences.

The general purpose of the present invention is to obviate said drawbacks by providing a dispensing machine which dispenses, according to an automatic route, a dose of ice-cream on a cone, which machine is reliable, and is equipped with particular measures in order to prevent any possible errors of procedure by a customer which uses the machine.

In view of such a purpose, according to the present invention the present Applicant devised a machine for the production of ice cream and its dispensing on a cone, of the express type, and performing a dispensing cycle in an automatic way following a start-up command, characterized in that said machine comprises first mobile cone supporting means, which are driven to move, by means of second moving means, between a first resting position, and a second position of initial dispensing, near the dispensing mouth of an ice-cream dispensing device, and an electrical control circuit, which controls said dispensing cycle and said second moving means.

Said first cone supporting means and said dispensing mouth are protected by a door, with which a device of detection of the occurred shutting cooperates, which supplies an ackowledgement signal to said electrical control circuit in order to enable said circuit to start up the ice-cream dispensing cycle when said door is shut.

With said first cone supporting means, a device of detection of the presence of a cone on them cooperates, which supplies an acknowledgement signal to said electrical control circuit in order to start up the ice-cream delivery cycle when said cone is present on said first means.

In order to better clarify the explanation of the finding and its advantages over the prior art, reference is now made to the hereto attached drawings, in which:

Figure 1 represents the electrical diagram of a control circuit which controls the ice-cream dispensing in a machine accomplished according to the innovative principles of the invention;

Figure 2 represents a schematic and partial perspective view of the front region of the machine using the circuit of Figure 1;

Figure 3 represents a schematic, side elevation, sectional view of the mechanism of movement of a cone-holder ring of the machine of Figure 1.

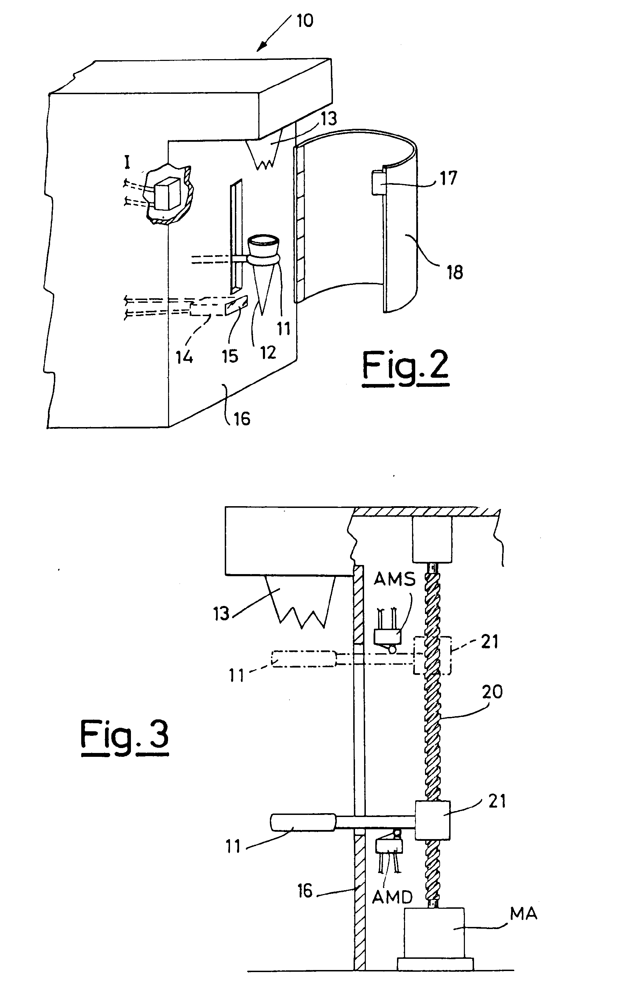

Referring to the drawings, in Figure 2 the detail of the ice-cream dispensing region of a machine accomplished according to the innovative principles of the present invention is represented. As one can see from said figure, the ice-cream dispensing region 10 comprises a cone holder ring 11, vertically movable between a first, bottom position, and a second, upper position, suitable for holding a cone for ice-creams 12. Near the upper position of the ring 11 a dispenser 13 for dispensing the ice-cream produced by the machine is provided.

Behind the frontal panel 16, along which the ring 11 slides, there is a photo-cell 14, in visual communication with the external environment by means of a transparent window 15, so as to detect the presence, or less, of the cone on the ring 11. Behind said frontal panel 16 there is installed also a magnetic switch I actuated by a small-size magnet 17 installed on a side edge of a door 18, which door covers, when is closed, the whole stroke of the ring 11, as well as the dispenser 13.

Said ring 11 is moved along its vertical stroke by means of the simple mechanism schematically depicted in Figure 3: a motor MA actuates a worm 20 along which a support 21 slides, which support extends through the panel 16, and bears the ring 11.

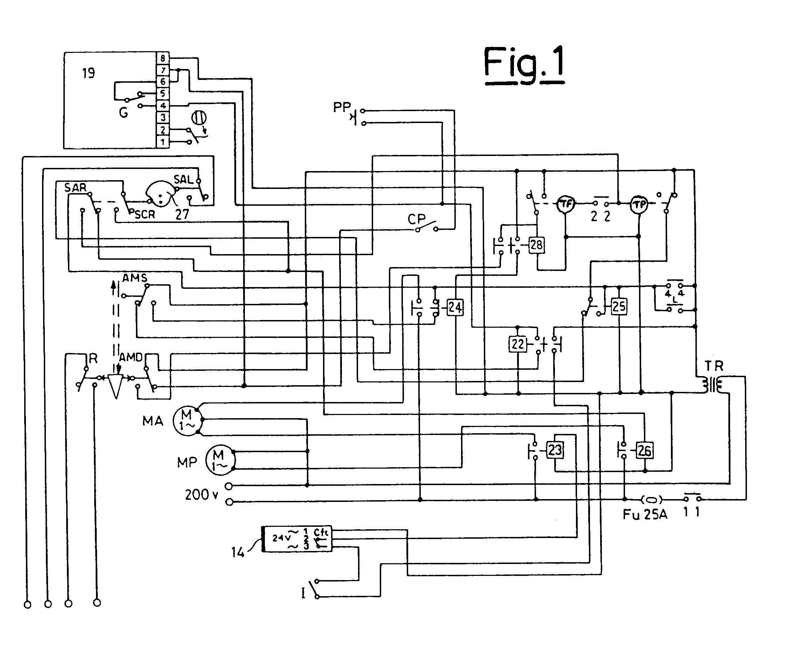

The eletrical circuit which automates the cycle of dispensing of an ice-cream dose directly on the cone is shown in Figure 1. As one can see on said figure, the circuit comprises a coin box 19 which starts up the dispensing cycle upon the introduction, by the customer, of a suitable coin into it, the motor MA, which drives the cone-holder ring 11 in the vertical direction, so as to approach said ring to, or move it away from, the mouth of the ice-cream dispenser 13, and a motor MP which, through a reduction gear, raises and lowers a piston provided inside the dispensing unit, activating or discontinuing the flow of the ice-cream stream dispensed by said unit.

In addition to the above-said components, a certain number of relays and microswitches are installed in the machine, and are so connected as to accomplish the whole ice-cream dispensing cycle.

For the sake of simplicity, the connections between all of the elements of the circuit of Figure 1, and their purpose in the global function of the circuit will be disclosed in the following simultaneously with the disclosure of the carrying out of a cycle of dispensing of an ice-cream dose.

The positions of all of the contacts shown in the circuit of Figure 1 are those in which the corresponding elements are in their resting, or stand-by, condition, between an ice-cream dose dispensing cycle, and the subsequent cycle, except for contact 1-1, which is the contact which feeds the whole circuit with electrical power, and for contact 2-2, which is used (as it will be disclosed later on) for the operations of machine cleaning.

In the following disclosure, both said contacts will be assumed to be closed.

The microswitch AMD is actuated by the cone-holder ring and is in its condition with its contacts as shown in Figure 1 when said ring is in the lowermost position of its stroke (as shown in Figure 3), whilst the microswitch AMS is actuated by the cone-holder ring when said ring is in the uppermost position of its stroke (as shown in chain line in Figure 3).

By sliding a suitable coin into the coin box 19, a contact G is closed for a a very short time, and sends a power feed impulse to a relay 22 through the closed contact of the microswitch AMD; said relay 22 is provided with two contacts which, when are closed, perform the following functions: the one (through the normally closed contact of the microswitch AMS), the function of maintaining energized the relay 22 also after the disappearing of the feed impulse generated by the contact G of the coin box 19; and the other, the function of sending the energizing power, through the magnetic switch I and a contact Cft, to a relay 23. Said magnetic switch I is positioned in such a way as to be closed when the protection door 18 is shut; and the contact Cft belongs to the photocell 14, so positioned as to detect the presence, or less, of a cone on the cone-holder ring, and is closed only if the cone is positioned on said ring. Therefore, the relay 23 is energized only if a cone is correctly positioned on the cone-holder ring 11, and if the protection door 18 is closed. When the relay 23 is excited, its contact feeds the motor MA with electrical power, and said motor MA starts to move upwards the ring 11 together with the cone it holds. As soon as the ring leaves its lowermost position, the microswitch AMD switches, turning into its position opposite to as shown in Figure 1. When it reaches its uppermost position, the cone-holder ring causes the microswitch AMS to switch, with said microswitch AMS therefore discontinuing the power feeding to the relay 22 which, by getting de-energized, de-energizes the relay 23, which opens its contact and consequently stops the motor MA. Therefore, the result is obtained that the ring is stopped in its uppermost stroke position, i.e., in its nearest position to the mouth of the ice-cream dispenser 13. The switching of the microswitch AMS, besides causing the stopping of the movement of the ring 11, causes also a relay 25 (through a normally closed contact of a relay 24), as well as a relay 26 (through a microswitch SAR) to be energized. The closing of the contact of the relay 26 causes electrical power to be fed to the motor MP, which hence actuates the piston of the dispenser, opening it, and thus causing the ice-cream dispensing to be started.

As is schematically shown, still in the diagram of Figure 1, the microswitch SAR is controlled, together with a second microswitch SCR, by a cam 27, which is driven in its turn by the same motor MP which actuates the dispenser piston. Such a cam, when the motor MP is started up, revolves (in the clockwise direction, as referred to the view as depicted in the drawing), and after half revolution (corresponding to the maximum opening of the ice-cream dispenser) switches both SAR and SCR microswitches. The switching of SAR microswitch causes the relay 26 to be de-energized and therefore the motor MP, and, consequently, the cam 27 and the piston, to be stopped, with the dispenser being consequently kept completely open in order to dispense the maximum ice-cream flow-rate. The switching of the microswitch SAR also causes two timers to be fed with electrical power; said timers are denominated: the one, the "shape timer" TF; and the second, the "dose timer" TP. Said timers have a delay time of about one second, after which they close their own contact for a short time period, and are calibrated in such a way that the first one to close is the timer TF. The closure of the contact of the timer TF causes the relay 28 to be energized, with the closure of both contacts of which causing: the one, the power feeding to the same relay 28 to be continued through the contact of the microswitch AMD (which, inasmuch as the cone-holder ring is in its uppermost position, is in its opposite position to as depicted in the circuit of Figure 1), also after the end of the impulse of closure of the contact of the timer TF; and, the other: the power feeding to the relay 24 which, by getting energized, feeds the motor MA with electrical power, so that said motor MA starts to revolve in the revolution direction opposite to as above, thus causing the cone-holder ring to move downwards. The other contact of the relay 24 interrupts the power feeding to the relay 25 through it; said relay 25 remains however still energized, in that it is also fed with power through its own switch contact, and the normally closed contact of the dose timer TP. When the time set on the timer TP has elapsed, the contact of said timer opens for a short time, discontinuing the power feeding to the relay 25 which, by getting de-energized, switchs its own contact, bringing said contact back into its resting position as shown in Figure 1. In such a way, through said contact of its own, through the contact of the timer TP, which, after the short impulse, has closed again, and through the microswitch SCR (which is closed, in that the cam 27 is still in its position revolved by half revolution relatively to the position as shown in Figure 1), the relay 26 gets fed again with electrical power and, by getting energized, feeds with power, through its own contact, the motor MP, which starts moving again the piston of the dispenser, discontinuing the ice-cream stream outflowing and, simultaneously, revolves the cam 27 which, after revolving by a further half revolution (corresponding to the lowermost position of the piston of the dipenser and, therefore, to the full discontinuing of the ice-crean dispensing) returns back into its position as shown in Figure 1, bringing back the microswitches SAR and SCR into their original position and, therefore, SCR switches off the power feeding to the relay 26, thus stopping the motor MP and, consequently, the dispenser piston and the cam 27.

Finally, the cone-holder ring 11 reaches its bottom stroke limit position and switches the microswitch AMD, turning it back into its position as depicted in Figure 1 and consequently discontinuing the power feeding to the relay 28 which, by getting de-energized, switches off the power feed to the relay 24 which, in turn, discontinuous the power feed to the motor MA, which, by stopping, stops the movement of the cone-holder ring, by now come into its lowermost stroke position.

All of the elements shown in the diagram of Figure 1 have thus returned back into their initial condition, and the machine has performed a full cycle of dispensing of a dose of ice-cream.

In order to start again the cycle, it is enough to slide a further coin into the coin box 19.

Besides starting the operating cycle by means of the introduction of a coin, the cycle can be manually started as well, without using a coin. For such a purpose, a push-button PP and a switch CP in series to each other are provided; with said elements in series being both in parallel to the contact G of the coin box. In such a way, once that the switch CP is closed, at each actuation of the push-button PP, the operating cycle is started up in the same way as if a coin was slid into the coin box 19. The presence of the switch CP installed inside the machine, and therefore accessible by authorized personnel only, is provided in order to disable the push-button PP, installed outside the machine, when the coin operation is desired, thus preventing the machine from being started up by the simple depressing of the push-button PP.

The contacts marked on the electrical diagram of Figure 1 with the symbols 2-2 and 4-4 can be actuated from a control board installed inside the machine (analogously to contact 1-1), and are used during the procedure of machine washing and cleaning. In fact, by opening the contact 2-2. the shape timer TF is excluded, with the starting up of the cone-holder ring driving motor being prevented, and, simultaneously, the closure of the contact 4-4 maintains the piston in its position of dispenser opening for an indefinite time, therefore independently from the time set on the timer TP. In such a way, the machine remains in its dispensing condition, making it possible it to be completely emptied, and, by filling the ice-cream contained with clean water, said machine to be washed. Finally, a switch L, also installed on the inner control board of the machine, makes it possible, when it is depressed for a short time and the relay 25 is consequently fed with electrical power independently from the sliding of a coin into the coin box, and from the movement of the cone-holder ring, a cycle of ice-cream delivery to be completed, so as to bring the machine back into its stand-by condition waiting for a coin to be inserted after that, owing to a whatever cause (e.g., an blackout in electrical power supply during the execution of the dispensing cycle), the dispensing cycle was discontinued without being completed.

As one can observe from the diagram of Figure 1, except for the motors, fed with power at 220 V c.a., the remainder of the circuit is totally fed with power at 24 V by means of a voltage transformer TR, with a fuse Fu being installed in series to the primary winding of said transformer, for safety reasons.

Finally, the reasons for the presence of the microswitches SAL and R has to be explained. The microswitch R is closed simultaneously with the switching of the microswitch AMD, when the cone-holder ring starts moving upwards, and is used in order to start up the motor driving the screw feeder of the machine, in order to cause the pressure to be increased in the ice-cream contained inside it, so as to secure a homogeneous outlet of ice-cream from the dispenser at the next opening of the dispensing. The microswitch SAL is closed, on the contrary, by the cam 27 throughout the time during which the piston remains lifted and, consequently, the dispenser remains open. Such a microswitch SAL is connected with a safety timer (not in the figures, in that it belongs to the cold-generating circuit of the machine) and which, if the opened condition of the piston lasts for a time longer than the prefixed time (and generally slightly longer than the time value set on the dose timer TP), turns off the motor of the screw feeder, thus causing the outflowing of ice-cream to be discontinued even if the dispenser is still open, in the meanwhile an alarm sound is signal emitted. This is useful in order to prevent the ice-cream to continue to outflow from the dispenser, until said ice-cream is completely exhausted, in case owing to a whatever reason the piston remains blocked in its lifted, viz. dispensing, position.

None of the sections of the machine in which ice-cream is produced, and, in particular, of the sections connected with the microswitch SAL and R are shown, in that they can be of any types known from the prior art, used in the machines for express- or soft-type ice-cream production, and are therefore easily imaginable by anyone skilled in the art, nor the piston mechanism of the dispenser is shown or disclosed in detail.

As regards the user, the machine operates in an extremely simple way.

Once that he has slid the coin into the coin box (or, in case the push-button PP is enabled by means of the switch CP, once that he has depressed the push-button PP), the customer should just open the protection door 18 before the cone-holder ring 11, place a cone (drawn, e.g., from a purposely provided cone dispenser installed beside the machine) on said ring, and shut the door. When the door is shut, inasmuch as both of the conditions of presence of the cone (as detected by the photocell 14 which, hence, closes the contact Cft), and of "closed" protection door (as detected by the magnetic contact I which, hence, closes) are "true", the machine starts up the cycle of ice-cream dispensing by lifting the cone-holder ring so that it reaches its uppermost position in near the mouth of the dispenser 13. Simultaneously, the screw feeder of the machine starts revolving, so as to put under pressure the ice-cream contained inside it. When the cone-holder ring reaches its uppermost position, the dispenser piston is lifted, thus opening the dispenser, and the outflowing of the dose of ice-cream starts. After about one second (i.e., the time preset on the shape timer TF), the cone-holder ring starts moving downwards, while ice-cream continues to outflow, the ice-cream outflowing being discontinued when the time preset on the dose timer TP is over. When the cone-holder ring comes into its lowermost position, the customer has just to open the door, and take his cone with its dispensed ice-cream dose. The machine is thus ready to start a new cycle.

The delay in the beginning of the downwards movement of the ring relative to the beginning of the dispensing, as well as the continuing of said dispensing for a certain after such a beginning, are necessary in order to give the ice-cream on the cone its generally pointed typical shape.

As one can see from the above disclosure, the electrical circuit of the machine secures an error-free cycle of the machine and, thanks to the presence of the double safety, constituted by the magnetic switch of the door which protects the cone-holder ring and the ice-cream dispenser, and by the photocell which detects the presence of the cone on the ring, minimizes the possibility of a mistake by the customer, while simultaneously preventing that any hampering attempts in order to get larger, or charge-free, ice-cream doses may be carried out successfully. Furthermore, inasmuch as the cone is moved by the cone-holder ring during the dispensing cycle, an optimum dispensing of ice-cream on the cone is secured, without any experience or skill being required from the customer.

## Claims

1. Machine for the production of ice-cream and its dispensing on a cone, of the express type, and performing a dispensing cycle in an automatic way following a start-up command, characterized in that said machine comprises first mobile cone supporting means, which are driven to move, by means of second moving means, between a first resting position, and a second position of initial dispensing, near the dispensing mouth of an ice-cream dispensing device, and an electrical control circuit, which controls said dispensing cycle and said second moving means.

2. Machine according to claim 1, characterized in that said first cone supporting means and said dispensing mouth are protected by a door, with which a device of detection of the occurred shutting cooperates, which supplies an acknowledgement signal to said electrical control circuit in order to enable said circuit to start up the ice-cream dispensing cycle when said door is shut.

3. Machine according to claim 1 or 2, characterized in that with said first cone supporting means, a device of detection of the presence of a cone on them cooperates, which supplies an acknowledgement signal to said electrical control circuit in order to enable said circuit to start up the ice-cream delivery cycle when said cone is present on said first means.

4. Machine according to claim 2, characterized in that said occurred shutting detecting device is accomplished as a magnetic switch actuated by a magnet installed on said door.

5. Machine according to claim 3 characterized in that said device for detecting the presence of the cone is provided as a photocell.

6. Machine according to any of the preceding claims, characterized in that said starting-up command is generated by means of a coin box, when a coin is slid into said coin box.

## Patentansprüche

1. Gerät für die Herstellung von Eiscreme und die Ausgabe auf eine Tüte, vom Expreßtyp, welches ausgehend von einem Startkommando automatisch einen Ausgabezyklus durchführt, dadurch gekennzeichnet, daß das Gerät erste bewegbare Tüten-Support-mittel, welche durch zweite Antriebsmittel zu einer Bewegung zwischen einer ersten Ruheposition und einer zweiten Position eines Ausgabebeginnes nahe der Ausgabeöffnung einer Ausbringvorrichtung für Eiscreme antreibbar sind, und einen elektrischen Steuerkreis umfaßt, welcher den Ausgabezyklus und die zweiten Antriebsmittel steuert.

2. Gerät nach Anspruch 1, dadurch gekennzeichnet, daß die ersten Tüten-Supportmittel und die Ausgabeöffnung von einer Tür geschützt sind, mit welcher eine Vorrichtung zur Detektion des erfolgten Schließens zusammenwirkt, welche dem elektrischen Steuerkreis ein Bestätigungssignal zuführt, so daß der Kreis den Start des Eiscreme-Ausgabezyklus ermöglicht, wenn das Tor geschlossen ist.

3. Gerät nach Anspruch 1 oder 2, dadurch gekennzeichnet, daß mit den ersten Tüten-Supportmitteln eine Vorrichtung für die Detektion des Vorhandenseins einer Tüte auf diesen zusammenwirkt, welche dem elektrischen Steuerkreis ein Bestätigungssignal zuführt, so daß durch den Kreis der Start des Eiscreme-Ausbringzyklus ermöglicht wird, wenn sich die Tüte auf den ersten Mitteln befindet.

4. Gerät nach Anspruch 2, dadurch gekennzeichnet, daß die Detektionsvorrichtung für das erfolgte Schließen als magnetischer Schalter ausgebildet ist, welcher durch einen am Tor angeordneten Magnet betätigbar ist.

5. Gerät nach Anspruch 3, dadurch gekennzeichnet, daß die Detektionsvorrichtung für das Vorhandensein der Tüte mit einer Photozelle ausgebildet ist.

6. Gerät nach einem der vorangehenden Ansprüche, dadurch gekennzeichnet, daß das Startkommando mit Hilfe eines Münzbehälters generiert ist, wenn eine Münze in den Münzbehälter eingeführt wird.

## Revendications

1. Appareil pour la production de crème glacée et sa distribution sur un cône, du type express, et pour exécuter un cycle de distribution de façon automatique suivant un ordre de mise en route, caractérisé en ce que ladite machine comprend des premiers moyens mobiles de support de cônes, qui sont entraînés de manière à se déplacer, par l'intermédiaire de seconds moyens de déplacement, entre une première position de repos, et une seconde position de distribution initiale, près de l'ouverture de distribution d'un dispositif distributeur de crème glacée et, un circuit de commande électrique, qui commande ledit cycle de distribution et lesdits seconds moyens de déplacement.

2. Appareil selon la revendication 1, caractérisé en ce que lesdits premiers moyens de support de cônes et ladite ouverture de distribution sont protégés par une porte, avec laquelle coopère un dispositf de détection de la survenue de la fermeture qui délivre un signal de réception audit circuit de commande électrique afin de permettre audit circuit de mettre en route le cycle de distribution de la crème glacée lorsque ladite porte est fermée.

3. Appareil selon la revendication 1 ou 2, caractérisé en ce que coopère, avec lesdits premiers moyens de support de cônes, un dispositif de détection de la présence d'un cône sur lesdits moyens, qui délivre un signal de réception audit circuit de commande électrique afin de permettre audit circuit de commande électrique de mettre en route le cycle de distribution de crème glacée lorsque ledit cône est présent sur lesdits premiers moyens.

4. Appareil selon la revendication 2, caractérisé en ce que le dispositif de détection de la survenue de la fermeture est réalisé sous la forme d'un commutateur magnétique actionné par un aimant monté sur ladite porte.

5. Appareil selon la revendication 3, caractérisé en ce que le dispositif pour détecter la présence du cône est prévu sous la forme d'une cellule photo-électrique.

6. Appareil selon l'une quelconque des revendications précédentes, caractérisé en ce que l'ordre de mise en route est généré à l'aide d'une boîte à pièces, lorsqu'on introduit une pièce dans ladite boîte à pièces.

Fig.1

EP 0 330 252 B1

_Fig.2_

_Fig.3_

8